Europäisches Patentamt

European Patent Office

Office européen des brevets

(11) Numéro de publication: **0 394 438**
**A1**

(12) DEMANDE DE BREVET EUROPEEN
PUBLI E EN APPLICATION DE
L'article 158, paragraphe 3 de la
CBE

(21) Numéro de dépôt: 88907449.8

(22) Date de dépôt: 14.04.88

(86) Numéro de dépôt internationale :
PCT/SU88/00080

(87) Numéro de publication internationale :
WO 89/09719 (19.10.89 89/25)

(51) Int. Cl.5: **B62K 25/06**

(43) Date de publication de la demande:
31.10.90 Bulletin 90/44

(84) Etats contractants désignés:
DE FR GB IT SE

(71) Demandeur: **KIEVSKY**
**INZHENERNO-STROITELNY INSTITUT**
**Vozdukhoflotsky pr., 31**
**Kiev 252037(SU)**

(72) Inventeur: **ZAMITTER, Mikhail Naumovich**
**ul. Aviakonstruktora Antonova, 2/32-4-18**
**Kiev, 252186(SU)**
Inventeur: **KLJUBIN, Vladimir Nikitovich**
**ul. Lenina, 12-18 Moskovskaya obl.**
**Reutov, 143952(SU)**
Inventeur: **NICHAI, Bogdan Adamovich**
**ul. Tatarskaya, 3/2-138**
**Kiev, 252107(SU)**
Inventeur: **MIICHENKO, Anatoly Mikhailovich**
**ul. Zhdanova, 59-3**
**Kievskaya obl. Boyarka, 255510(SU)**

(74) Mandataire: **Durand, Yves Armand Louis et al**
**Cabinet Z. Weinstein 20, Avenue de**
**Friedland**
**F-75008 Paris(FR)**

(54) SUSPENSION POUR ROUE DE MOTOCYCLE.

(57) La suspension d'une roue d'une motocyclette comporte un élément élastique (1) ayant une forme en C dans le plan de flexion et articulé par ses extrémités au levier pendulaire (5) portant la roue et au cadre (3) de la motocyclette. L'élément élastique (1) de la suspension permet d'améliorer la souplesse de marche de la motocyclette grâce à la flexibilité élevée des tronçons d'extrémité de l'élément élastique (1) fonctionnant comme un ressort à lames dans le sens de leur petite résistance, tandis que le tronçon médian de l'élément élastique fonctionne dans le sens de sa plus grande résistance.

FIG. 1

- 1 -

Suspension d'une roue d'une motocyclette

## Domaine de l'invention

La présente invention concerne les suspensions à amortissement des moyens de transport et a notamment pour objet les suspensions avant et arrière d'une motocyclette.

## Etat de la technique

La majorité des suspensions connues des roues des motocyclettes comportent un dispositif de guidage constitué par un levier pendulaire ou une fourche, portant une roue et un élément élastique constitué par un ressort hélicoïdal dans lequel est placé un appareil d'amortissement d'oscillations ou un amortisseur du type hydraulique, qui est articulé au cadre de la motocyclette et au levier pendulaire, sur le tronçon compris entre son axe de rotation et l'axe de la roue.

La description de telles suspensions est donnée, par exemple, dans le livre "Motocyclette "Dnepr-16" (1985, Avtoexport, (Moscou).

Etant donné que l'élément élastique de telles suspensions est constitué par un ressort hélicoïdal, la quantité de métal nécessaire pour leur fabrication est assez importante malgré leurs dimensions relativement faibles. Par exemple, la quantité de métal nécessaire pour la fabrication des éléments élastiques de la suspension arrière des motocyclettes lourdes telles que "Dnepr" constituent 0,0023 kg par unité (Newton) de charge statique. A titre de comparaison on peut dire que la caractéristique analogue du camion-benne KamAZ-5510 ("Camion KamAZ" par I.M. Jurkovsky et V.A. Tolpygin, 1975, édition DOSAAF, Moscou) est égale à 0,00178 kg/N,

- 2 -

c'est-à-dire elle est plus petite de 29%.

Parmi les suspensions connues la plus perfectionnée est la suspension de la roue de la motocyclette "Dnepr" ("Motocyclette "Dnepr-16", 1985, Avtoexport, (Moscou) comportant un levier pendulaire portant la roue et un élément élastique et un amortisseur associés au levier pendulaire et au cadre de la motocyclette. L'élément élastique est constitué par un ressort hélicoïdal et l'amortisseur est un appareil d'amortissement hydraulique disposé dans l'élément élastique de façon concentrique.

Cependant, en outre de la quantité de métal considérable nécessaire pour sa fabrication, la suspension connue comprend un nombre de pièces suffisamment important. Cette suspension n'assure pas la souplesse de marche requise de la motocyclette à certains régimes d'exploitation et ne supprime pas les charges d'inertie notables agissant lors du débattement sur·les passagers et la motocyclette.

## Exposé de l'invention

On s'est donc proposé de créer une suspension d'une roue d'une motocyclette dans laquelle la modification de la forme de l'élément élastique permettrait d'augmenter la flexibilité de l'élément élastique pendant la course active et la détente et, en même temps, la quantité de métal nécessaire pour la fabrication de l'élément élastique et la souplesse de marche.

Le problème ainsi posé est résolu à l'aide d'une suspension d'une roue d'une motocyclette comprenant un levier pendulaire qui porte la roue et un élément élastique et un amortisseur associés au levier pendulaire et au cadre de la motocyclette, caractérisée,

- 3 -

selon l'invention, en ce que dans le plan de flexion de l'élément est réalisé en forme de la lettre "C" et comporte un tronçon médian à fibre neutre droite et des tronçons d'extrémité à fibre neutre courbe et en ce que cet élément élastique présente une forme de même type et une même surface de la section transversale suivant toute sa longueur, en ce que tous les longs axes principaux d'inertie du tronçon médian sont identiques et se situent dans le plan de flexion de l'élément élastique et, avec cela, les courts axes d'inertie sont identiques et en ce que les tronçons d'extrémité les longs axes principaux d'inertie ont une longueur qui décroît progressivement et les courts axes principaux d'inertie ont une longueur qui augmente progressivement de sorte que la longueur de ces derniers devient égale, à une certaine section, à celles des longs axes principaux d'inertie.

La suspension conforme à l'invention permet d'élever la souplesse de marche de la motocyclette grâce à la non-linéarité optimale de la caractéristique élastique. De plus, cela permet de réduire les charges de choc agissant pendant le débattement sur le passager et la motocyclette grâce au fait que l'élément élastique assure l'amortissement efficace des actions dynamiques tant au débattement qu'à la course active. Le tronçon médian de l'élément élastique se recourbe dans le plan de raideur maximal et les tronçons d'extrémité, à partir de la section où les deux moments principaux d'inertie sont en égalité, se recourbent dans le sens de la raideur minimale de l'élément élastique, c'est-à-dire les tronçons d'extrémité présentent une flexibilité élevée. De plus, la fabrication de la suspension conforme à l'invention nécessite moins de métal que celle des suspensions connues.

- 4 -
## Description succinte des dessins

L'invention sera mieux comprise et d'autres buts, détails et avantages de celle-ci apparaîtront mieux à la lecture de la description explicative qui va suivre de différents modes de réalisation donnés uniquement à titre d'exemples non limitatifs avec références aux dessins non limitatifs annexés où les mêmes pièces sont désignées par les mêmes repères et dans lesquels:

- la figure 1 représente une vue d'ensemble de la suspension de la roue arrière d'une motocyclette, selon l'invention;

- la figure 2 est une projection frontale de l'élément élastique de la suspension, selon l'invention;

- la figure 3 montre l'élément élastique représenté sur la figure 2 en coupe suivant III-III;

- la figure 4 montre une vue d'ensemble de la suspension de la roue avant 10 d'une motocyclette, selon l'invention.

## Meilleure variante de réalisation de l'invention

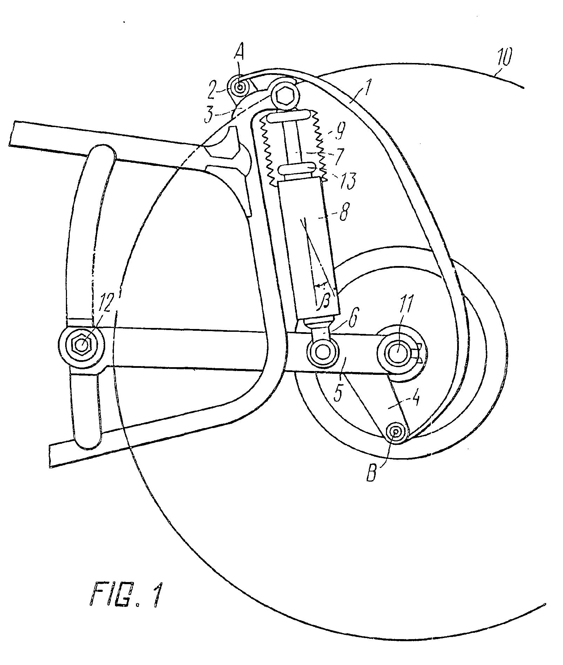

La suspension d'une roue d'une motocyclette faisant l'objet de l'invention peut être utilisée tant pour la roue arrière que pour la roue avant. La figure 1 illustre un exemple de réalisation de l'invention dans la suspension de la roue arrière d'une motocyclette.

La nouvelle suspension de la roue arrière d'une motocyclette comporte un élément flexible ayant la forme d'un C dans le plan de sa flexion, un ressort 1, articulé par une extrémité à un oeil d'axe géométrique A situé à l'emplacement d'une patte 2 du cadre 3 de la

- 5 -

motocyclette (non représenté) et par l'autre extrémité à un oeil d'axe géométrique B situé à l'emplacement d'une patte 4 du levier pendulaire 5. Un amortisseur 6 est articulé au levier pendulaire 5 et au cadre 3 de la motocyclette. L'amortisseur 6 comporte une tige 7 pouvant se déplacer par rapport au corps 8 et un cache-protecteur caoutchouté 9 masquant sa partie supérieure. La roue 10 de la motocyclette est montée sur l'axe 11 se trouvant à l'extrémité libre du levier pendulaire 5. L'autre extrémité du levier pendulaire 5 est articulée, par l'intermédiaire de l'axe 12, au cadre 3 de la motocyclette. Une bague de butée 13 est disposée de façon concentrique par rapport à la tige 7 de l'amortisseur 6.

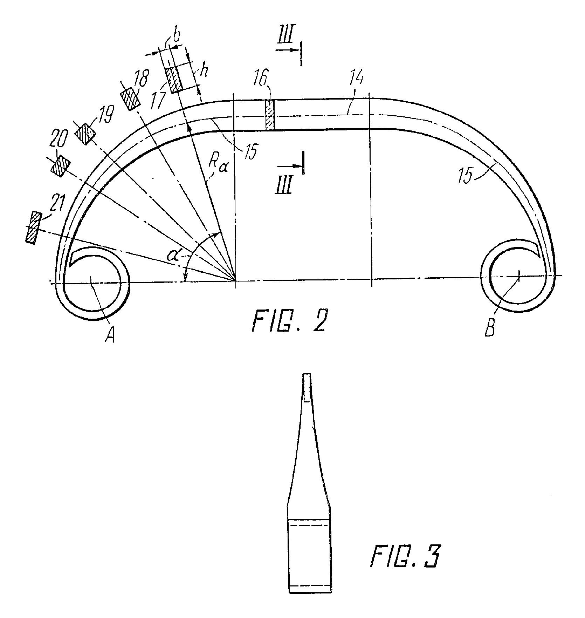

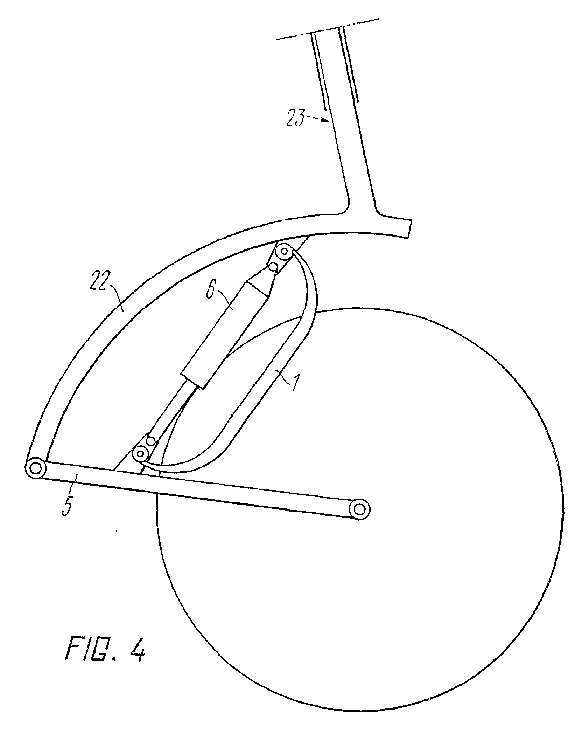

Le ressort 1 (figure 2) comporte un tronçon médian 14 à fibre neutre droite et deux tronçons d'extrémité 15 à fibres neutres courbes. Les sections transversales du ressort 1 désignées par les repères 16, 17, 18, 19, 20 et 21 ont une forme de même type et dans l'exemple donné de réalisation de l'invention il s'agit des rectangles ayant une même surface et dont les côtés varient progressivement. La disposition des axes principaux d'inertie dans le tronçon médian 14 est telle que l'axe pour lequel le moment d'inertie est maximal se situe en travers par rapport au plan de flexion et, dans les tronçons d'extrémité 15, l'axe de la section pour lequel le moment d'inertie est maximal se situe dans le plan de flexion ou dans le plan recevant la fibre neutre de sorte que la contrainte de flexion dans n'importe quelle section du ressort 1, sauf les portions situées au voisinage immédiat des oeils avec axes A et B, soit la même. Comme on peut le voir sur les figures 2 et 3, tous les longs axes principaux d'inertie des sections transversales du tronçon médian 14 sont identiques et les courts axes principaux d'inertie sont également identiques. Dans le cas des tronçons d'extrémité 15, les

- 6 -

longs axes principaux d'inertie se raccourcissent progressivement et les courts axes principaux d'inertie s'allongent de l'extrémité vers une section transversale 19 où ils deviennent égaux aux longs axes principaux d'inertie. Il est à noter que les termes "long axe principal d'inertie" et "court axe principal d'inertie" sont attribués initialement dans le présent texte aux axes déterminés qui conservent leur appellation même dans le cas où le long axe d'inertie devient plus court que le court axe d'inertie, comme c'est le cas pour le repère 18 de la figure 2.

La suspension faisant l'objet de l'invention fonctionne comme suit.

Quand la roue 10 quitte la surface d'appui, le ressort 1 se tend et fléchit sous l'action des forces de pesanteur de la roue et du levier pendulaire 5 et de la force de réaction appelée de les équilibrer et appliquée à la patte 2. La tige 7 de l'amortisseur 6 s'étend hors du corps 8 sur une partie notable de sa longueur. Dans la position statique de la figure 1, l'axe 11 de la roue 10 subit une charge statique appliquée à cette roue. Cette charge est équilibrée par la réaction de la surface d'appui communiquée au pneu de la roue.

Le ressort 1 soumis à l'action de la charge statique se comprime et fléchit et sa distance entre les axes A et B devient plus petite par comparaison à la valeur de cette distance au moment correspondant à la position initiale décrite ci-dessus. En tournant dans le sens trigonométrique par rapport à la position initiale, le levier pendulaire 5 agit sur l'amortisseur 6 et fait monter légèrement son corps 8 qui recouvre la tige 7.

Au fur et à mesure de l'accroissement de la charge agissant sur la roue, la compression et la flexion du

- 7 -

ressort 1 deviennent plus grandes ce qui aboutit à une augmentation adéquate de l'écart du levier pendulaire 5 par rapport à sa position initiale.

Lorsque la charge est maximale, l'écart du levier pendulaire 5 atteint le maximum, la distance entre les axes A et B devient minimale et le corps 8 de l'amortisseur recouvre la tige 7 de sorte que la bague de butée en caoutchouc 13 se trouve comprimée au maximum par la face en bout supérieur du corps 8 et le bourrelet formant butée de la tige 7, ce qui bloque le mouvement relatif ultérieur des éléments du mécanisme de la suspension.

Pendant le débattement, la charge d'inertie agissant sur la roue 10 et le levier pendulaire 5 provoque la tension et la flexion du ressort 1, ce qui fait diminuer la valeur des charges d'inertie transmises aux passagers et aux éléments des couples cinématiques du mécanisme de la suspension et contribue à augmenter la souplesse de marche de la motocyclette.

La souplesse de marche de la motocyclette augmente également par suite de la non-linéarité de la caractéristique élastique du ressort 1 dans lequel la distance entre les axes A-B et la fibre neutre du tronçon médian 14 du ressort 1 varie pendant le fonctionnement de ce dernier, ce qui fait varier la raideur du ressort 1, en le faisant augmenter pendant la traction et en le faisant diminuer pendant la compression.

Les exigences imposées à la suspension de la motocyclette faisant l'objet de la présente invention sont satisfaites le plus complètement grâce à l'utilisation du ressort 1 et à son montage derrière l'axe de la roue 11.

- 8 -

Par exemple, en présence de la charge maximale, le ressort de la suspension de la motocyclette "Dnepr" fonctionne presque à la limite des contraintes admissibles, tout comme dans le cas d'autres suspensions analogues.

Le fait d'utiliser le ressort conforme à l'invention et de le monter derrière l'axe de la roue à permis, pour les mêmes contraintes, le même matériau et la même marche de la roue, de réduire de 40 à 43 % la quantité de métal nécessaire pour la fabrication de l'élément élastique de la suspension.

L'effet obtenu est dû tant au nouveau procédé de disposition du dispositif élastique qu'aux avantages spécifiques du ressorts 1.

La disposition du dispositif élastique de la suspension derrière l'axe de la roue 10 permet d'équilibrer le moment de la force agissant sur la roue 10, par rapport à l'axe 12 du levier pendulaire 5, par une force beaucoup plus petite que l'effort de charge du ressort placé entre l'axe d'oscillation du levier pendulaire et l'axe de la roue de la suspension connue. La dimension longitudinale (distance entre - axes) de ce ressort peut être sensiblement réduite par comparaison à celle du ressort à lame conforme à SU, A, 1040244.

Les conditions d'emplacement du ressort 1 dans la suspension de la roue arrière de la motocyclette imposent que ce ressort placé derrière l'axe 11 de la roue 10 soit incliné par sa ligne passant par les axes sous un angle ß par rapport à l'axe de l'amortisseur 6 (figure 1) disposé de même que dans la suspension constituant l'antériorité la plus proche.

- 9 -

L'angle ß optimal est compris entre 10 et 20°. Si l'angle donné a une valeur plus petite, la patte d'attache supérieure de l'amortisseur peut constituer un obstacle pour le ressort et s'il est plus grand, cela aboutit à un accroissement excessif de la charge P longitudinale exercée sur le ressort 1 du fait que la composante verticale $P_V$ de cette force, destinée à équilibrer la charge Q, requise pour supporter la roue, est exprimée à l'aide de la formule

$$P_V = Q = P \cos \beta \ , \ \text{d'où } P = \frac{Q}{\cos \beta} \ .$$

Le ressort 1 équipant la suspension faisant l'objet de l'invention se distingue du ressort à lame connu (SU,A,1040244) notamment par le fait qu'il contient trois zones qui diffèrent la diposition des axes principaux d'inertie de leurs sections.

Dans la zone médiane comprenant le tronçon 14 du ressort 1 à fibre neutre droite (figure 2) et les portions voisines des tronçons d'extrémité 15 à fibres neutres courbes allant du milieu du ressort jusqu'à la section 19 où les axes principaux d'inertie ont la même longueur, la flexion sous charges s'opère dans le plan de la plus grande raideur des sections 16, 17 et 18, ce qui permet de supporter les moments de flexion avec une plus petite masse de métal. Ainsi, la zone donnée du ressort fonctionne comme le ressort à lame mentionné. L'existence de cette zone assure la faible masse du ressort.

Dans les deux zones d'extrémité allant depuis les oeils de fixation des articulations d'axes A et B jusqu'à la section 19 mentionnée où les axes principaux d'inertie ont une même longueur, la flexion sous charge s'opère dans le plan de la plus petite raideur de sections 20, 21 du ressort, tout comme dans les ressorts à lames

- 10 -

connus. L'existance de ces zones assure une faible raideur du ressort.

La combinaison de ces différentes zones dans une même construction permet de réaliser un ressort caractérisé par une faible masse en association avec une flexibilité élevée, dit ressort à lames et plaquettes dans le texte qui suit.

La suspension équipée du ressort décrit, possède une caractéristique à élasticité non-linéaire maximale, ce qui permet d'assurer le confort élevé de la motocyclette pendant la circulation aux différentes vitesses et sur toute route, compte tenu du fait que le nouveau ressort amortit aussi efficacement les charges dynamiques tant à la course active de la roue qu'à la détente.

En même temps, les particularités susmentionnées du ressort à lames et plaquettes permettent d'obtenir le mouvement requis de la roue tout en assurant la commodité d'emplacement du dispositif élastique dans la suspension, sa capacité de charge élevée et sa masse réduite.

En principe, la forme des sections transversales du nouveau ressort peuvent être, par exemple, rectangulaire, elliptique, en oval, en double T, etc. La forme rectangulaire des sections transversales est la plus avantageuse pour les raisons de technologie et de résistance des matériaux.

Notamment, dans le cas d'une forme elliptique ou ovale, la surface des portions de la section, les plus éloignées des fibres neutres, est plus petite que dans le cas de la forme rectangulaire présentant une surface analogue; aussi, la hauteur des sections égale, les sections de forme ovale auront une résistance plus

- 11 -

petite. Par exemple, si la section du nouveau ressort est réalisée en ellipse avec des demi-axes "a" et "b", alors la surface de cette section est : $S = \pi ab$

et son moment résistant par rapport au grand axe est tel que : $W_e = \dfrac{\pi ab^2}{4}$

Lorsque la hauteur de la section rectangulaire est $h = 2b$, la largeur de la section rectangulaire d'une surface S est égale à :

$$b_r = \frac{S}{h} = \frac{\pi a}{2}$$

Le moment résistant de cette section par rapport à l'axe neutre $b_r$ : $W_r = \dfrac{b_r h^2}{6} = \dfrac{\pi ab^2}{3}$

Lorsqu'une poutre de section transversale elliptique fléchit par rapport au grand axe de l'ellipse sous l'action du moment M, la plus grande contrainte de flexion normale est telle que :

$$\sigma_e = \frac{M}{W_e} = \frac{4M}{\pi ab^2}$$

Par contre, la plus grande contrainte de flexion d'une poutre de section rectangulaire ayant une même surface est telle que :

$$\sigma_r = \frac{M}{W_r} = \frac{3M}{\pi ab^2}$$

c'est-à-dire elle est plus petite de 33 %.

Les dimensions des sections rectangulaires transversales $b_r$ et $h_r$ (figure 2) sont fonction du rayon-vecteur $R_\alpha$ et

- 12 -

de l'angle $\alpha$ qu'il décrit avec la ligne passant par les axes.

Les dimension des sections transversales du ressort à lames et plaquettes, assurant l'égalité des plus grandes contraintes de flexion normales pour la presque totalité de sa partie active, peuvent être déterminées à l'aide des formules suivantes.

Le moment de flexion dans la section disposée sous un angle $\alpha$ par rapport à la ligne reliant les articulations A-B du ressort, dû à l'action de la force P axée le long de la ligne indiquée est : $M_\alpha = PR_\alpha \sin\alpha$.

Le moment résistant requis des sections équirésistantes du ressort disposées sous les angles $\alpha$ est :

$$W_\alpha = \frac{PR_\alpha \sin\alpha}{\sigma_\alpha}.$$

Dans le cas du ressort à lames et plaquettes dont les sections rectangulaires ont une même surface, $F = b_\alpha h_\alpha = const.$; il en résulte que :

$$W_\alpha = \frac{Fh_\alpha}{6} \quad et \quad h_\alpha = \frac{6PR_\alpha \sin\alpha}{F \sigma_\alpha}.$$

Comme on le voit sur la figure 4, la suspension conforme à l'invention est destinée à équiper la roue avant de la motocyclette est identique à la suspension de la roue arrière (figure 1) à cette différence que le ressort 1, le levier pendulaire 5 et l'amortisseur 6 sont assemblés au cadre 3 de la motocyclette par l'intermédiaire de l'arc 22 et de la colonne de direction 23, ce qui ne constitue pas une invention et est évident pour les spécialistes.

- 13 -

## Applicabilité industrielle

La suspension d'une roue motocyclette conforme à la description précédente peut être utilisée sur tous les types de "deux roues à moteur" sans leur apporter de modifications importantes de structure.

- 14 -

Revendication

Suspension d'une roue d'une motocyclette comprenant un levier pendulaire qui porte la roue et un élément élastique et un amortisseur reliés au levier pendulaire et au cadre de la motocyclette, caractérisée en ce que l'élément élastique (1) est réalisé, dans le plan de flexion, en forme de lettre "C" et comporte un tronçon médian (14) à fibre neutre droite et des tronçons d'extrémité (15) à fibre neutre courbe, en ce que l'élément élastique présente une section transversale ayant une forme de même type et une même surface suivant toute sa longueur, en ce que tous les axes longs principaux d'inertie du tronçon médian (14) sont identiques et se situent dans le plan de flexion de l'élément élastique (1) et les axes courts principaux d'inertie de ce tronçons sont aussi identiques, et en ce que les axes longs principaux d'inertie des tronçons d'extrémité (15) se raccourcissent progressivement et les axes courts principaux d'inertie desdits tronçons se rallongent progressivement de sorte qu'à une certaine section (19) leurs longueurs deviennent égales à celles des axes longs principaux d'inertie.

FIG. 1

FIG. 2

FIG. 3

FIG. 4

# INTERNATIONAL SEARCH REPORT

International Application No **PCT/SU 88/00080**

## I. CLASSIFICATION OF SUBJECT MATTER (if several classification symbols apply, indicate all)

According to International Patent Classification (IPC) or to both National Classification and IPC

$IPC^4$ B 62 K 25/06

## II. FIELDS SEARCHED

| Minimum Documentation Searched [7] | |
|---|---|
| Classification System | Classification Symbols |
| $IPC^4$ | B 62 K 25/00 ÷ 25/26 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | GB, A, 2038736 (LEW-WAYS LIMITED et al.) 30 July 1980 (30.07.80), see page 1, lines 127-130, page 2 lines 1-11, fig. 1 | 1 |
| A | US, A, 4082307 (ROBERT JOHN TAIT), 4 April 1978 (04.04.78), see column 1, the abstract | 1 |
| A | FR, A1, 2495094 (HONDA GIKEN KOGYO KABUSHIKI KAISHA), 4 June 1982 (04.06.82), see page 5, lines 14-24, fig. 1 & US, A, 4429760, 07.02.84 JP, A, 57-104478, 29.06.82 JP, A, 57-66079, 22.04.82 DE, A1, 3139347, 22.04.82 CA, A, 1163567, 13.03.84 GB, B, 2087324, 26.09.84 | 1 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 13 October 1988 (13.10.88) | 6 January 1989 (06.01.89) |
| International Searching Authority ISA/SU | Signature of Authorized Officer |

Form PCT/ISA/210 (second sheet) (January 1985)